# EUROPÄISCHE PATENTSCHRIFT

(11) **EP 3 994 344 B1**
(45) Veröffentlichungstag und Bekanntmachung des Hinweises auf die Patenterteilung: **19.07.2023**
(21) Anmeldenummer: 20734886.3
(22) Anmeldetag: 23.06.2020
(51) Int. Cl.: F01P 5/10, B60K 11/02, F04C 2/16, F04C 2/08, F04C 13/00, B60K 1/04, F01C 21/10, F04C 15/00, B60K 1/00

(54) **INTEGRIERTE SCHRAUBENSPINDEL-KÜHLMITTELPUMPE**
INTEGRATED SCREW-SPINDLE COOLANT PUMP
POMPE À VIS À LIQUIDE DE REFROIDISSEMENT INTÉGRÉE

(30) Priorität: 04.07.2019 DE 102019118086
(43) Veröffentlichungstag der Anmeldung: 11.05.2022
(73) Patentinhaber: NIDEC GPM GmbH, 98673 Auengrund /OT Merbelsrod (DE)
(72) Erfinder: PAWELLEK, Franz, 96486 Lautertal (DE)
(74) Vertreter: Kuhnen & Wacker Patent- und Rechtsanwaltsbüro PartG mbB
(86) Internationale Anmeldenummer: PCT/EP2020/067429
(87) Internationale Veröffentlichungsnummer: WO 2021/001204

(56) Entgegenhaltungen:
- EP-A1- 0 405 160
- WO-A1-2014/138519
- WO-A1-2019/072895
- DE-A1-102005 025 816

## Beschreibung

Die vorliegende Erfindung betrifft eine elektrische Schraubenspindel-Kühlmittelpumpe mit einer integralen Bauweise zur Integration in einem Temperierungskreislauf. Es wird ferner eine Temperierungsvorrichtung für eine zu temperierende Baugruppe vorgeschlagen, in deren Temperierungskreislauf die elektrische Schraubenspindel-Kühlmittelpumpe integriert ist.

Schraubenspindelpumpen weisen eine verschmutzungsunempfindliche, robuste Drehkolbenmechanik auf, die ohne filigrane Elemente wie Sperrschieber oder dergleichen auskommt. Eine volumetrische Verstellung gegenüber einer vorgegebenen Drehzahl ist nicht möglich. Mechanisch angetriebene Schraubenspindelpumpen sind vornehmlich aus dem Einsatz in großdimensionierten Anwendungen, wie z.B. Ölpumpen in stationären Anlagen oder Schiffsmotoren bekannt, in denen sie bei relativ konstanten Betriebspunkten laufen.

Die Anmeldeschriften DE 10 2005 025 816 A1, WO2019/072895 A1 und die EP 2 765 311 A2 offenbaren Schraubspindelpumpen mit einem mehrteiligen Gehäuse.

Im Bereich der Kraftstoffförderpumpen von Fahrzeugen sind in letzter Zeit kleiner dimensionierte, elektrisch angetriebene Schraubenspindelpumpen bekannt geworden. Die Druckschriften US 2018/0216614 A1, DE 10 2015 101 443 B3, WO 2014/138519 A1 und DE 10 2017 210 771 A1 beschreiben derartige Kraftstoffförderpumpen, deren nasslaufender Elektromotor ohne Spalttopf ausgeführt ist, sodass sowohl der Rotor als auch der Stator mit dem Kraftstoff in Kontakt stehen. Die bekannten Schraubenspindel-Kraftstoffpumpen sind jedoch nicht auf eine Anwendung als elektrische Kühlmittelpumpe übertragbar, die korrosiven Kühlmitteln ausgesetzt sind.

Die Kühlkreisläufe batterieelektrischer Fahrzeuge weisen eine hohe Komplexität mit einer Vielzahl an Leitungsverzweigungen, Fluidanschlüssen sowie diversen Pumpen und Ventilen auf. Jeder Knoten- oder Übergangspunkt der Leitungsverzweigungen verursacht einen erhöhten Montageaufwand von Leitungen und Dichtungen. Hierzu benötigt jeder Knoten- oder Übergangspunkt der Leitungsverzweigungen einen zugänglichen Bauraum. Zudem erfordert eine Aufteilung des Durchlassquerschnitts des gesamten Kühlkreislaufs auf Leitungsverzweigungen mit entsprechend kleineren Durchlassquerschnitten einen höheren Förderdruck in dem Kühlkreislauf. Damit nimmt ein Risiko für Leckagen oder größere Undichtigkeiten zu. Aufgrund der Alterung von elastischen Bestandteilen in Leitungen und Dichtungen verursacht jeder Knoten- oder Übergangspunkt der Leitungsverzweigungen darüber hinaus einen erhöhten Wartungsaufwand.

Demnach wird bei der Entwicklung von batterieelektrischen Fahrzeugen eine integrierte Konstruktion des Thermomanagementsystems angestrebt, die mit einer verringerten Anzahl von Schlauchverbindungen und Fluidkupplungen auskommt. Ein wirtschaftliches Problem besteht darin, dass alternative Konstruktionen von integrierten Leitungsverzweigungen die Kosten für herkömmliche Knoten- oder Übergangspunkte nicht wesentlich übersteigen sollen.

Eine Aufgabe der vorliegenden Erfindung besteht in der Vermeidung von Schlauchverbindungen und Fluidkupplungen.

Die Aufgabe wird erfindungsgemäß durch eine elektrische Schraubenspindel-Kühlmittelpumpe mit den Merkmalen des Anspruchs 1 gelöst. Die elektrische Schraubenspindel-Kühlmittelpumpe zeichnet sich insbesondere dadurch aus, dass ein Aufnahmegehäuse eine Zulaufstrecke sowie eine Rücklaufstrecke des Temperierungskreislaufs umfasst, die in einen Hohlraum münden; ein Teil des Hohlraums ein Spindelgehäuse umgibt und mit einer Auslassöffnung -des Spindelgehäuses- sowie der Rücklaufstrecke kommuniziert; und ein Dichtungselement, das eine Abdichtung zwischen einer Saug- und einer Druckseite bereitstellt, zu einer Stirnfläche eines axialen Endes des -in den Hohlraum- eingesteckten Spindelgehäuses angeordnet ist.

Die Erfindung sieht erstmals eine einsteckbare elektrische Schraubenspindelpumpe vor, die eine integrierte Konstruktion mit einem Temperierungskreislauf bildet.

Somit wird eine alternative Schnittstelle an Übergängen zwischen einer Pumpe und einem Kreislauf geschaffen, durch die herkömmlichen Bauteile wie Schlauchverbindungen oder Fluidkupplungen entfallen.

Die erfindungsgemäße Ausgestaltung der integralen Bauweise lässt sich zudem kostengünstig, bauraumoptimiert, modular und unempfindlich gegenüber Fertigungstoleranzen in einer Serienfertigung realisieren, wie nachstehend im Einzelnen erläutert.

Interne Kanalführungen wie eine Zulaufstrecke und Rücklaufstrecke des Kreislaufs oder ein Hohlraum lassen sich in der gusstechnischen Fertigung von Gehäuseteilen kostengünstig realisieren.

Der Hohlraum, der das Spindelgehäuse umgibt, wird als eine Austrittskammer der Pumpe verwendet. Bei der Konstruktion eines Gehäuses steht somit ein Freiheitsgrad von 360° bezüglich einer radialen Anordnung der Rücklaufstrecke zu der Pumpe zur Verfügung. Somit kann eine Anordnung gewählt werden, die auf einen möglichst geringen Bauraum bezüglich einer Systemumgebung optimiert ist.

Zu einer Seite weist die Pumpe einen in einen Hohlraum einsteckbaren Pumpenkopf in Form des Spindelgehäuses auf und zu der anderen Seite ein außerhalb des Hohlraums liegendes Motorgehäuse. Trotzt der integrierten Bauweise wird eine Verwendung von Elektromotoren mit unterschiedlicher Dimensionierung ermöglicht.

Bei der Herstellung von Gussteilen für ein Gehäuse können Fertigungstoleranzen auftreten. Fertigungstoleranzen können insbesondere auftreten, wenn Passungen zwischen Gehäuseteilen gebildet werden, die Teil von zwei Baugruppen mit unterschiedlicher Funktion oder Herkunft sind. Im Falle von spanend nachbearbeiteten Passungen oder Bohrungen sind radiale Maßhaltigkeiten in der Regel weniger kritisch als axiale Maßhaltigkeiten. Bei der erfindungsgemäßen Konstruktion sind der Einlass und ein Dichtungselement dem Ende des eingesteckten Spindelgehäuses stirnseitig zugeordnet. Somit wird ein Element, das die Funktion einer Abdichtung der Pumpe übernimmt, zugleich dazu genutzt, eine Fertigungstoleranz der axialen Abmessung des Hohlraums des Aufnahmegehäuses und eine Fertigungstoleranz der axialen Abmessung des eingesteckten Spindelgehäuses auszugleichen.

Ferner unterliegt die Abdichtung zwischen Saugseite und Druckseite der Pumpe einer hohen Druckdifferenz. Eine ausreichende Dichtungswirkung, die durch eine Pressung der Dichtung einstellbar ist, lässt sich anhand eines Anzugsmoments zwischen dem Gehäuseflansch und dem Aufnahmegehäuse sicherstellen.

Die genannten Aspekte tragen insgesamt zu einer integrierten Bauweise bei, die im Vergleich zu herkömmlichen Schnittstellen zwischen einer Pumpe und einem Kreislauf mittels Schlauchverbindungen oder Fluidkupplungen eine höhere Betriebssicherheit und Lebensdauer gewährleistet.

Die Auswahl einer elektrischen Schraubenspindel-Kühlmittelpumpe stellt einen Pumpentyp bereit, mit dem höhere Förderdrücke als bei einer Kreiselpumpe bzw. radialen Impellerpumpe erzielbar sind. Im Vergleich zu herkömmlichen Kühlmittelpumpen stellt der erfindungsgemäße Pumpentyp ein höheres Förderdruckpotential für Kühlkreisläufe bzw. Temperierungskreisläufe mit Leitungsverzweigungen und entsprechenden Engpässen zur Verfügung.

Darüber hinaus weist die Schraubenspindel-Kühlmittelpumpe im Vergleich zu herkömmlichen Kühlmittelpumpen vom Kreiselpumpentyp eine geringere akustisch wirksame Fläche zu dem umgebenden Gehäuse auf. Die Umlaufbewegung der Flügel eines Flügelrads erzeugen drehzahlabhängige Druckschwankungen an Kammerwänden der Pumpenkammer, die in einem resonanten Frequenzbereich von Gehäuseteilen liegen können. Die Umlaufbewegung der Schraubenspindeln erzeugt hingegen ein gleichförmigeres Förderverhalten, wobei lediglich eine kleine gehäuseseitige Stirnfläche zu den Schraubenspindeln einer druckseitigen Pulsation ausgesetzt ist. Demnach gewährleistet der erfindungsgemäße Pumpentyp eine geringere Geräuschentwicklung, was insbesondere vorteilhaft ist, wenn das Aufnahmegehäuse einen weiteren Hohlraum umfasst, beispielsweise als integraler Bestandteil einer weiteren Baugruppe in dem Temperierungskreislauf.

Vorteilhafte Weiterbildungen der Erfindung sind Gegenstand der abhängigen Ansprüche.

Gemäß einem Aspekt der Erfindung kann die Rücklaufstrecke in eine Stirnfläche des Hohlraums münden, die der Stirnfläche des axialen Endes des eingesteckten Spindelgehäuses gegenüberliegt. Diese Anordnung trägt zu einer möglichst kurzen saugseitigen Förderstrecke zwischen dem Aufnahmegehäuse und dem Spindelgehäuse bei.

Gemäß einem Aspekt der Erfindung kann das Dichtungselement die Mündung der Rücklaufstrecke und die Einlassöffnung des Spindelgehäuses radial umschließen. Diese Anordnung trägt zu einer möglichst geringen Dichtungsfläche zwischen der Saugseite und der Druckseite der Pumpe bei.

Gemäß einem Aspekt der Erfindung kann das Aufnahmegehäuse an einem Gehäuse der Baugruppe, die durch den Temperierungskreislauf temperiert wird, integral ausgebildet sein. Diese Ausgestaltung sieht eine weitere konstruktive Integration zwischen einem pumpenseitigen Gehäuse und einem Gehäuseteil eines im Temperierungskreislauf nachfolgend angeschlossenen Moduls vor. Somit können weitere Knoten- oder Verbindungspunkte an einer Schnittstelle zwischen einem Zulauf und Rücklauf des Temperierungskreislaufs und der zu temperierenden Baugruppe mittels Schlauchverbindungen oder Fluidkupplungen entfallen und ein entsprechender Bauraum hierfür entfallen.

Gemäß einem Aspekt der Erfindung können die Schraubenspindeln durch eine Spielpassung innerhalb des Spindelgehäuses schwimmend gelagert sein. Bei Kühlmittelpumpen vom Kreiselpumpentyp stellt ein axialer Spalt zwischen einem Flügelrad und der Pumpenkammer die größte Schwachstelle bezüglich der Abdichtung zwischen der Saugseite und der Druckseite der Pumpe dar. Eine Leckage an dem axialen Spalt und ein entsprechender Verlust der Förderleistung nehmen bei höheren Förderdrücken zu. Die Einstellung eines dichtungswirksamen Spaltmaßes hängt von der Maßhaltigkeit einer axialen Passung zwischen Flügelrad und Gehäuse nach einer Montage ab. Bei einer Schraubenspindelpumpe erstreckt sich der effektive Dichtspalt zwischen Saugseite und der Druckseite über die Gesamtlänge der Schraubenspindeln. Durch die Ausgestaltung einer Spielpassung werden die schwimmend gelagerten Schraubenspindeln auf der Saugseite gegen eine gehäuseseitige Anlauffläche gedrückt. Dadurch ergibt sich selbsttätig ein wirksamer axialer Dichtspalt gegen eine Leckage zwischen den Stirnflächen der Schraubenspindeln und dem Bereich des Einlasses im Spindelgehäuse. Der axiale Dichtspalt bildet sich unabhängig von Fertigungstoleranzen. Die Einhaltung eines axialen Spaltmaßes am gegenüberliegenden Ende der Schraubenspindeln ist nicht erforderlich.

Gemäß einem Aspekt der Erfindung können eine Schraubenspindel und eine Welle des Elektromotors durch eine Steckkupplung mit einer Spielpassung verbunden sein. Durch den Einsatz einer Steckkupplung, die zumindest ein axiales Spiel zulässt, wird die Spielpassung zur schwimmenden Lagerung der angetriebenen Schraubenspindel möglichst wenig beeinträchtigt. Ferner wird eine Schnittstelle zur Ankoppelung einer Welle von unterschiedlichen Elektromotoren geschaffen und ein modulares Antriebskonzept ermöglicht.

Gemäß einem Aspekt der Erfindung kann das Spindelgehäuse im Bereich der Einlassöffnung durch eine Passfeder abgegrenzt sein, die durch einen radialen Montagespalt eingesetzt ist. Durch Ausgestaltung einer Passfeder, die vereinfacht als Lagerschild mit einer Einlassöffnung ausgebildet sein kann, wird die Montage und Einpassung der Schraubenspindeln vereinfacht.

Gemäß einem Aspekt der Erfindung kann das Dichtungselement einen axialen Bereich des axialen Endes des Spindelgehäuses radial umschließen und den radialen Montagespalt der Passfeder abdichten. In diesem Fall übernimmt das Dichtungselement eine Dichtungsfunktion an einer weiteren Öffnung. Durch den Einsatz eines Dichtungselements für die Einlassöffnung und den Montageschlitz wird ein geringer Montageaufwand sichergestellt.

Gemäß einem Aspekt der Erfindung kann ein Dichtungsring, der eine Abdichtung zwischen der Druckseite und einer äußeren Umgebung bereitstellt, in einem radialen Freiraum zwischen dem Spindelgehäuse und dem Aufnahmegehäuse angeordnet sein. Die Abdichtung der Druckseite nach außen unterliegt einer geringeren Druckdifferenz als diejenige zwischen der Saugseite und der Druckseite. Eine Pressung und Dichtungswirkung des Dichtungsrings kann auf einfache und ausreichende Weise anhand der radialen Maßhaltigkeit der Gehäuseteile sichergestellt werden. Wie zuvor erläutert ist die radiale Maßhaltigkeit bearbeitungstechnisch weniger kritisch als die axiale Maßhaltigkeit. Somit wird wiederum ein geringer Montageaufwand sichergestellt.

Gemäß einem Aspekt der Erfindung kann der Gehäuseflansch einen Lagersitz für ein Wellenlager aufweisen. Diese Ausgestaltung ermöglicht den Einsatz eines einzigen Wellenlagers und trägt zu einer kompakten axialen Abmessung der Pumpe bei.

Gemäß einem Aspekt der Erfindung kann das Wellenlager eine Gleitlagerbuchse sein, die von einer abgedichteten Schmierstofffüllung umgeben ist. Diese Ausgestaltung ermöglicht eine kompakte und langlebige Lagerung der Welle. Die abgedichtete Schmierung des Lagers widersteht einer Ausspülung oder Ablagerungen des Kühlmittels. Im Gegensatz zu ölbasierten Fördermedien wie Schmierölen oder Kraftstoffen kann der Kontakt des Gleitlagers mit einem Kühlmittel die Gleiteigenschaften des Wellenlagers beeinträchtigen.

Gemäß einem Aspekt der Erfindung kann eine Leistungselektronik in dem Motorgehäuse in einem thermischen Kontakt zu dem Gehäuseflansch angeordnet sein. Der Gehäuseflansch steht in einem Kontakt und in einem Wärmeaustausch mit dem Aufnahmegehäuse, das von dem Kühlmittel des Temperierungskreislaufs durchströmt wird. Die Anordnung der Leistungselektronik in einem thermischen Kontakt zu dem Gehäuseflansch stellt eine wirksame Struktur zur Ableitung von Abwärme der Leistungselektronik bereit.

Die Erfindung wird nachfolgend anhand einer Ausführungsform mit Bezug auf die begleitende Zeichnung beschrieben.

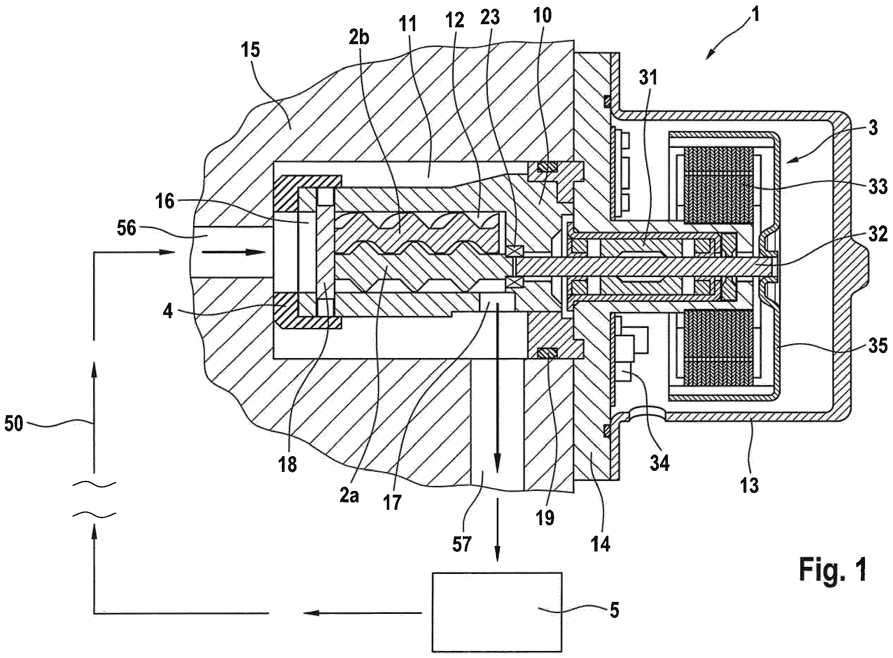

- Fig. 1: zeigt eine schematische Schnittansicht durch eine Schraubenspindel-Kühlmittelpumpe gemäß einer Ausführungsform der Erfindung.

Unter dem Begriff eines Temperierungskreislaufs wird im Sinne dieser Offenbarung ein Förderkreislauf für ein Kühlmittel verstanden, das in einen thermischen Kontakt zu einer Baugruppe geführt wird, um eine Abwärme der Baugruppe aufzunehmen und an ein kühleres Medium wie z.B. die Atmosphäre abzugeben. Allerdings ist die Funktionsweise des Temperierungskreislaufs nicht auf eine Kühlfunktion beschränkt. So kann der Temperierungskreislauf während einer Anlaufphase der zu temperierenden Baugruppe auch eine Aufwärmfunktion mittels einer Wärmequelle bereitstellen.

Die Begriffe Zulaufstrecke und Rücklaufstrecke des Temperierungskreislaufs beziehen sich auf eine Betrachtung der zu temperierenden Baugruppe. Demzufolge sind die Zulaufstrecke des Temperierungskreislaufs mit der Auslassöffnung der Pumpe und die Rücklaufstrecke des Temperierungskreislaufs mit der Einlassöffnung der Pumpe verbunden.

In einem Temperierungskreislauf können mehrere zu temperierende Baugruppen von gleicher oder unterschiedlicher Funktion in mehreren Modulen, hintereinander oder parallel durchströmt, eingebunden sein. Ferner kann ein Temperierungskreislauf mehrere Pumpen umfassen.

Der Begriff Aufnahmegehäuse bezieht sich im Sinne dieser Offenbarung auf einen Gehäusekörper, der als Gehäusebauteil oder als integraler Gehäuseabschnitt eines Gehäuses ausgebildet ist und der einen Bestandteil der Gehäusestruktur der Pumpe oder der zu temperierenden Baugruppe darstellt.

Unter dem Begriff Schraubenspindelpumpe werden im Sinne dieser Offenbarung schrägverzahnte Rotationskolbenpumpen mit einer Gewindesteigung zur Verdrängung des Fördermediums verstanden. Derartige Pumpentypen umfassen in der Regel eine angetriebene Schraubenspindel und wenigstens eine weitere Schraubenspindel, die über einen Eingriff der Verzahnung mitgeschleppt wird.

Die elektrische Schraubenspindelpumpe 1, die in Fig. 1 gezeigt ist, ist innerhalb eines Temperierungskreislaufs 50 integriert angeordnet. Der Temperierungskreislauf 50 dient dazu, eine Baugruppe 5 zu temperieren, wie beispielsweise um eine Abwärme aus dem Betrieb der Baugruppe 5 mittels einem von der Schraubenspindelpumpe 1 geförderten Kühlmittel abzuführen. In dem nachstehenden Anwendungsfall ist die nicht näher dargestellte Baugruppe 5 eine Traktionsbatterie für ein batterieelektrisches Fahrzeug. Ein solcher Temperierungskreislauf 50 weist eine Mehrzahl von Kanälen mit einem geringen Querschnitt auf, die in einem thermischen Kontakt mit einer Vielzahl von Batteriezellen stehen.

In der Ausführungsform der schematischen Darstellung aus Fig. 1 sind in einem Spindelgehäuse 10 eine angetriebene Schraubenspindel 2a und eine mitgeschleppte Schraubenspindel 2b in einer Spindelkammer 12 des Spindelgehäuses 10 drehbar aufgenommen. Eine Querschnittskontur der Spindelkammer 12 wird durch zwei Bohrungen im Spindelgehäuse 10 gebildet, deren Radien sich überschneiden, um einen Eingriff der Schraubenspindeln 2a, 2b zu gewährleisten. Eine offene Seite der Spindelkammer 12 wird durch eine Passfeder 18 abgegrenzt. Die Passfeder 18 ist als eine stirnseitige Kammerwand der Spindelkammer 12 flächig ausgebildet und weist eine Einlassöffnung 16 des Spindelgehäuses 10 auf. Die Passfeder 18 ist durch einen Montageschlitz senkrecht zu den Schraubenspindeln 2a, 2b in das Spindelgehäuse 10 eingesetzt.

Die Schraubenspindeln 2a, 2b sind durch eine radiale Spielpassung bezüglich der Querschnittskontur der Spindelkammer 12 und durch eine axiale Spielpassung der Spindelkammer 12 schwimmend gelagert. Im Pumpenbetrieb werden die Spindeln durch den Verdrängungsvorgang gegen die Passfeder 18 gedrückt. Die Passfeder 18 dient als ein Lagerschild zur axialen Gleitlagerung der Stirnflächen der Schraubenspindeln 2a, 2b.

Zu der rechts abgebildeten Antriebsseite der Schraubenspindeln 2a, 2b befindet sich eine Druckseite der Spindelkammer 12, die mit einer Auslassöffnung 17 des Spindelgehäuses 10 in Verbindung steht. Zu der anderen Seite der Schraubenspindeln 2a, 2b, auf der die Passfeder 18 angeordnet ist, befindet sich eine Saugseite der Spindelkammer 12. Die Saugseite der Spindelkammer 12 steht mit der Einlassöffnung 17 des Spindelgehäuses 10 in Verbindung.

Das Spindelgehäuse 10 bildet mit den Schraubenspindeln 2a, 2b einen einsteckbaren Pumpenkopf, der von einem axialen Ende des Spindelgehäuses 10, zu dem die Einlassöffnung 16 gerichtet ist, bis zu einem Gehäuseflansch 14, der an das gegenüberliegende axiale Ende des Spindelgehäuses 10 angeschlossen ist, in ein Aufnahmegehäuse 15 eingesteckt wird. Das Aufnahmegehäuse 15 ist ein Bestandteil der Schraubenspindelpumpe 1 und des Temperierungskreislaufs 50. Das Aufnahmegehäuse 15 kann zugleich ein integraler Bestandteil der zu temperierenden Baugruppe 5 sein, wie beispielsweise ein Modulgehäuse der Baugruppe 5, in dem der Temperierungskreislauf 50 in Form von integrierten Kanälen fortgeführt ist.

Das Aufnahmegehäuse 15 weist einen geöffneten Hohlraum 11 auf, der das Spindelgehäuse 10 bis zu dem Gehäuseflansch 14 aufnimmt. In den Hohlraum 11 münden eine Rücklaufstrecke 56 und eine Zulaufstrecke 57 des Temperierungskreislaufs 50. Die Zulaufstrecke 57 mündet in eine Umfangsfläche des Hohlraums 11. Der Hohlraum 11 umgibt das Spindelgehäuse 10 derart, dass ein ringförmiger Teil des Hohlraums 11 in Überschneidung mit der Auslassöffnung 17 und der Mündung der Zulaufstrecke 57 freisteht. In Fig.1 sind die Auslassöffnung 17 und eine Mündung der Zulaufstrecke 57 nach unten gerichtet dargestellt und zueinander ausgerichtet. Abweichend hierzu können sowohl die Auslassöffnung 17 als auch die Mündung der Zulaufstrecke 57 in beliebigen Winkeln zueinander ausgerichtet sein. Der freistehende Teil des Hohlraums 11 stellt eine druckseitige Verbindung zwischen dem Spindelgehäuse 10 und dem Temperierungskreislauf 50 her.

Die Rücklaufstrecke 56 mündet in eine stirnseitige Bodenfläche des geöffneten Hohlraums 11 und ist der Einlassmündung 16 am axialen Ende des eingesteckten Spindelgehäuses 10 gegenüberliegend zugeordnet. Ein Dichtungselement 4 umgibt die Mündung der Rücklaufstrecke 56 und die Einlassmündung 16, sodass eine saugseitige Verbindung zwischen dem Temperierungskreislauf 50 und dem Spindelgehäuse 10 hergestellt wird.

Das Dichtungselement 4 stellt ebenso die gehäuseseitige Abdichtung zwischen der Saugseite und der Druckseite der Schraubenspindelpumpe 1 dar. Das Dichtungselement 4 wird bei der Montage der Schraubenspindelpumpe 1 durch ein Anzugsmoment des Gehäuseflansches 14 gegen das Aufnahmegehäuse 15 dichtungswirksam eingepresst und gleicht axiale Fertigungstoleranzen zwischen dem Spindelgehäuse 10 und dem Hohlraum 11 aus. Das Dichtungselement 4 umgibt ferner einen Umfang des Spindelgehäuses 10 im Bereich des Montageschlitzes, durch den die Passfeder 18 eingeführt wird. Somit ist ein möglicher Leckagestrom entlang einer Steckpassung der Passfeder 18 abgedichtet. In dem freistehenden Hohlraum 11 ist in einem nutförmigen radialen Freiraum vor dem Gehäuseflansch 14 ein Dichtungsring 19 eingebracht, um die Druckseite der Schraubenspindelpumpe 1 nach außen abzudichten.

Die angetriebene Schraubenspindel 2a steht mit einem Elektromotor 3 in Verbindung. Zu der Druckseite der Spindelkammer 12 weist das Spindelgehäuse 10 einen Durchbruch für eine Welle 32 auf, die von dem Elektromotor 3 angetrieben wird. Ein Motorgehäuse 13, in dem der Elektromotor 3 angeordnet ist, ist auf der gegenüberliegenden Seite des Gehäuseflansches 14 angeschlossen. Ein innenliegender Stator 33 des Elektromotors 3 sitzt auf einem Kragenabschnitt des Gehäuseflansches 14. Ein außenliegender topfförmiger Rotor 35 umläuft den Stator 33 und ist mit einem Ende der Welle 32 verbunden. An dem Kragenabschnitt des Gehäuseflansches 14 ist innenliegend ein Lagersitz für ein Wellenlager 31 ausgebildet. Das Wellenlager 31 ist ein Gleitlager, das zu beiden axialen Enden abgedichtet und mit einem Schmierstoff gefüllt ist. Das andere Ende der Welle 32 ist mittels einer Steckkupplung 23, die ein axiales Spiel zulässt, mit der angetriebenen Schraubenspindel 2a gekoppelt.

Das Motorgehäuse 13 umfasst eine abgetrennte Motorkammer, in welcher der trockenlaufende Elektromotor 3 und eine Elektronik, insbesondere eine Leistungselektronik 34 zur Schaltung der elektrischen Leistung am Elektromotor 3 aufgenommen sind. Der Stator 33 umfasst Feldspulen, die von der Leistungselektronik 34 angesteuert und mit elektrischer Leistung versorgt werden. Der Stator 33 steht mit der Umfangsfläche des Kragenabschnitts des Gehäuseflansches 14 in einem thermischen Kontakt. So wird eine Abwärme aus den Feldspulen des Stators 33 über den Gehäuseflansch 14 auf das Aufnahmegehäuse 15 und das Spindelgehäuse 10 abgeleitet und von dem passierenden Temperierungskreislauf aufgenommen. Ebenso ist die Leistungselektronik 34 in einem thermischen Kontakt zu der Stirnfläche des Gehäuseflansches 14 angeordnet, um eine Abwärme der elektronischen Bauelemente in einen durchströmten Bereich des Temperierungskreislaufs abzuführen.

Nachfolgend wird die Schraubenspindelpumpe 1 in einer Förderrichtung des Temperierungskreislaufs 50 zur Temperierung einer Baugruppe 5 betrachtet. Ein flüssiges Fördermedium bzw. ein Kühlmittel wird aus der Rücklaufstrecke 56 des Temperierungskreislaufs 50 durch die Dichtung 4 und die Einlassöffnung 16 des Spindelgehäuses 10 auf der Saugseite in die Spindelkammer 12 eingesaugt. Eine Drehbewegung von in Eingriff stehenden Schraubenprofilen der drehenden Schraubenspindeln 2a, 2b erzeugt auf der Saugseite der Spindelkammer 12 einen Unterdruck und auf der gegenüberliegenden Druckseite der Spindelkammer 12 einen Überdruck. Das Kühlmittel wird durch eine kontinuierliche Verdrängung entlang einer Schraubensteigung der in Eingriff stehenden Schraubenprofile gefördert und durch die Auslassöffnung 17 des Spindelgehäuses 10 aus der Spindelkammer 12 ausgestoßen. Nach der Auslassöffnung 17 strömt das Kühlmittel über den Hohlraum 11 in die Zulaufstrecke 57 des Temperierungskreislaufs 50 und zu der Baugruppe 5.

### Bezugszeichenliste:

- 1: Schraubenspindelpumpe
- 2a: angetriebene Schraubenspindel
- 2b: mitgeschleppte Schraubenspindel
- 3: Elektromotor
- 4: Dichtung
- 5: zu temperierende Baugruppe
- 10: Spindelgehäuse
- 11: Hohlraum
- 12: Spindelkammer
- 13: Motorgehäuse
- 14: Gehäuseflansch
- 15: Aufnahmegehäuse
- 16: Einlassöffnung des Spindelgehäuses
- 17: Auslassöffnung des Spindelgehäuses
- 18: Passfeder
- 19: Dichtungsring
- 23: Steckkupplung
- 31: Wellenlager
- 32: Welle
- 33: Stator
- 34: Leistungselektronik
- 35: Rotor
- 50: Temperierungskreislauf
- 56: Rücklaufstrecke des Temperierungskreislaufs
- 57: Zulaufstrecke des Temperierungskreislaufs

## Patentansprüche

1. Elektrische Schraubenspindel-Kühlmittelpumpe (1) zur Integration in einen Temperierungskreislauf (50) einer zu temperierenden Baugruppe (5), aufweisend:
ein Motorgehäuse (13), in dem ein Elektromotor (3) aufgenommen ist,
ein Spindelgehäuse (10), in dem Schraubenspindeln (2a, 2b) aufgenommen sind, mit einer axialen Einlassöffnung (16) und einer radialen Auslassöffnung (17);
einen Gehäuseflansch (14), der das Motorgehäuse (13) und das Spindelgehäuse (10) verbindet,
ein Aufnahmegehäuse (15) mit einem geöffneten Hohlraum (11), in den das Spindelgehäuse (10) von einem axialen Ende bis zu dem Gehäuseflansch (14) einsteckbar ist;
**dadurch gekennzeichnet, dass**
das Aufnahmegehäuse (15) eine Zulaufstrecke (57) sowie eine Rücklaufstrecke (56) des Temperierungskreislaufs (50) umfasst, die in den Hohlraum (11) münden;
ein Teil des Hohlraums (11) das Spindelgehäuse (10) umgibt und mit der Auslassöffnung (17) sowie der Zulaufstrecke (57) kommuniziert; und
ein Dichtungselement (4), das eine Abdichtung zwischen einer Saug- und einer Druckseite bereitstellt, zu einer Stirnfläche des axialen Endes des eingesteckten Spindelgehäuses (10) angeordnet ist.

2. Elektrische Schraubenspindel-Kühlmittelpumpe (1) nach Anspruch 1, wobei die Rücklauflaufstrecke (56) in eine Stirnfläche des Hohlraums (11) mündet, die der Stirnfläche des axialen Endes des eingesteckten Spindelgehäuses (10) gegenüberliegt.

3. Elektrische Schraubenspindel-Kühlmittelpumpe (1) nach Anspruch 1 oder 2, wobei
das Dichtungselement (4) die Mündung der Rücklaufstrecke (56) und die Einlassöffnung (16) des Spindelgehäuses (10) radial umschließt.

4. Elektrische Schraubenspindel-Kühlmittelpumpe (1) nach einem der vorhergehenden Ansprüche, wobei
das Aufnahmegehäuse (15) an einem Gehäuse der Baugruppe (5), die durch den Temperierungskreislauf (50) temperiert wird, integral ausgebildet ist.

5. Elektrische Schraubenspindel-Kühlmittelpumpe (1) nach einem der vorhergehenden Ansprüche, wobei
die Schraubenspindeln (2a, 2b) durch eine Spielpassung innerhalb des Spindelgehäuses (10) schwimmend gelagert sind.

6. Elektrische Schraubenspindel-Kühlmittelpumpe (1) nach einem der vorhergehenden Ansprüche, wobei
eine Schraubenspindel (2a) und eine Welle (32) des Elektromotors (3) durch eine Steckkupplung (23) mit einer Spielpassung verbunden sind.

7. Elektrische Schraubenspindel-Kühlmittelpumpe (1) nach einem der vorhergehenden Ansprüche, wobei
das Spindelgehäuse (10) im Bereich der Einlassöffnung (16) durch eine Passfeder (18) abgegrenzt ist, die durch einen radialen Montagespalt eingesetzt ist.

8. Elektrische Schraubenspindel-Kühlmittelpumpe (1) nach Anspruch 7, wobei
das Dichtungselement (4) einen axialen Bereich des axialen Endes des Spindelgehäuses (10) radial umschließt und den radialen Montagespalt der Passfeder (18) abdichtet.

9. Elektrische Schraubenspindel-Kühlmittelpumpe (1) nach einem der vorhergehenden Ansprüche, wobei
ein Dichtungsring (19), der eine Abdichtung zwischen der Druckseite und einer äußeren Umgebung bereitstellt, in einem radialen Freiraum zwischen dem Spindelgehäuse (10) und dem Aufnahmegehäuse (15) angeordnet ist.

10. Elektrische Schraubenspindel-Kühlmittelpumpe (1) nach einem der vorhergehenden Ansprüche, wobei
der Gehäuseflansch (14) einen Lagersitz für ein Wellenlager (31) aufweist.

11. Elektrische Schraubenspindel-Kühlmittelpumpe (1) nach einem der vorhergehenden Ansprüche, wobei
das Wellenlager (31) eine Gleitlagerbuchse ist, die von einer abgedichteten Schmierstofffüllung umgeben ist.

12. Elektrische Schraubenspindel-Kühlmittelpumpe (1) nach einem der vorhergehenden Ansprüche, wobei
eine Leistungselektronik (34) in dem Motorgehäuse (13) in einem thermischen Kontakt zu dem Gehäuseflansch (14) angeordnet ist.

13. Temperierungsvorrichtung (1) zur Temperierung einer Baugruppe (5), aufweisend:
ein Aufnahmegehäuse (15), in dem die Baugruppe (5) aufgenommen ist;
einen Temperierungskreislauf (50), der in dem Aufnahmegehäuse (15) ausgebildet ist und in einem thermischen Kontakt mit der Baugruppe (5) steht;
eine elektrische Schraubenspindel-Kühlmittelpumpe (1) nach einem der Ansprüche 1 bis 12, die in den Temperierungskreislauf (50) integriert ist, wobei das Aufnahmegehäuse (15) als ein gemeinsames Bauteil der Temperierungsvorrichtung und der elektrische Schraubenspindel-Kühlmittelpumpe (1) integral ausgebildet ist.

14. Temperierungsvorrichtung (1) nach Anspruch 13, wobei die Baugruppe (5) ein Batteriespeichermodul mit einer Vielzahl von Batteriezellen ist.

## Claims

1. An electric screw coolant pump (1) for integration into a temperature control circuit (50) of an assembly (5) of which the temperature is to be controlled, comprising:
a motor housing (13) in which an electric motor (3) is accommodated,
a spindle housing (10), in which screw spindles (2a, 2b) are accommodated, with an axial inlet opening (16) and a radial outlet opening (17);
a housing flange (14) connecting the motor housing (13) and the spindle housing (10),
an accommodation housing (15) with an opened cavity (11) into which the spindle housing (10) is insertable from an axial end up to the housing flange (14);
**characterized in that**
the accommodation housing (15) includes a feeder line (57) as well as a return line (56) of the temperature control circuit (50) flowing into the cavity (11);
a part of the cavity (11) surrounds the spindle housing (10) and communicates with the outlet opening (17) as well as the feeder line (57); and
a sealing element (4) providing a seal between a suction side and a pressure side is arranged towards an end surface of the axial end of the inserted spindle housing (10).

2. The electric screw coolant pump (1) according to claim 1, wherein
the return line (56) opens in an end surface of the cavity (11) situated across from the end surface of the axial end of the inserted spindle housing (10).

3. The electric screw coolant pump (1) according to claim 1 or 2, wherein
the sealing element (4) radially surrounds the mouth of the return line (56) and the inlet opening (16) of the spindle housing (10).

4. The electric screw coolant pump (1) according to one of the preceding claims, wherein
the accommodation housing (15) is integrally formed at a housing of the assembly (5) of which the temperature is controlled by the temperature control circuit (50).

5. The electric screw coolant pump (1) according to one of the preceding claims, wherein
the screw spindles (2a, 2b) are mounted in a floating manner inside the spindle housing (10) by means of a clearance fit.

6. The electric screw coolant pump (1) according to one of the preceding claims, wherein
a screw spindle (2a) and a shaft (32) of the electric motor (3) are connected by means of a plug-in connector (23) with a clearance fit.

7. The electric screw coolant pump (1) according to one of the preceding claims, wherein
the spindle housing (10) is delimited in the area of the inlet opening (16) by a feather key (18) inserted through a radial assembly gap.

8. The electric screw coolant pump (1) according to claim 7 wherein
the sealing element (4) radially surrounds an axial area of the axial end of the spindle housing (10) and seals the radial assembly gap of the feather key (18).

9. The electric screw coolant pump (1) according to one of the preceding claims, wherein
a sealing ring (19) providing a seal between the pressure side and an external environment is arranged in a radial clearance between the spindle housing (10) and the accommodation housing (15).

10. The electric screw coolant pump (1) according to one of the preceding claims, wherein
the housing flange (14) has a bearing seat for a shaft bearing (31).

11. The electric screw coolant pump (1) according to one of the preceding claims, wherein
the shaft bearing (31) is a sliding bearing bushing surrounded by a sealed lubricant filling.

12. The electric screw coolant pump (1) according to one of the preceding claims, wherein
power electronics (34) are arranged inside the motor housing (13) in thermal contact with the housing flange (14).

13. A temperature control device (1) for controlling the temperature of an assembly (5) comprising:
an accommodation housing (15) in which the assembly (5) is accommodated;
a temperature control circuit (50) that is formed in the accommodation housing (15) and which is in thermal contact with the assembly (5);
an electric screw coolant pump (1) according to any of claims 1 to 12 integrated into the temperature control circuit (50), wherein
the accommodation housing (15) is integrally formed as one common element of the temperature control device and the electric screw coolant pump (1).

14. The temperature control device (1) according to claim 13, wherein
the assembly (5) is a battery storage module having a multitude of battery cells.

## Revendications

1. Pompe électrique à broches hélicoïdales pour fluide de refroidissement (1) pour intégration dans un circuit de régulation de température (50) d'un ensemble (5) à réguler en température, comportant:
un boîtier de moteur (13) dans lequel est reçu un moteur électrique (3),
un boîtier de broches (10), dans lequel sont reçues des broches hélicoïdales (2a, 2b), avec une ouverture d'entrée axiale (16) et une ouverture de sortie radiale (17) ;
une bride de boîtier (14) qui relie le boîtier de moteur (13) et le boîtier de broches (10),
un boîtier de réception (15) avec une cavité ouverte (11) dans laquelle le boîtier de broches (10) peut être inséré depuis une extrémité axiale jusqu'à la bride de boîtier (14) ;
**caractérisée en ce que**
le boîtier de réception (15) comprend une section d'amenée (57) ainsi qu'une section de retour (56) du circuit de régulation de température (50), qui débouchent dans la cavité (11) ;
une partie de la cavité (11) entoure le boîtier de broches (10) et communique avec l'ouverture de sortie (17) ainsi qu'avec la section d'amenée (57) ; et
un élément d'étanchéité (4), qui assure une étanchéité entre un côté aspiration et un côté pression, est disposé au niveau d'une face frontale de l'extrémité axiale du boîtier de broches (10) inséré.

2. Pompe électrique à broches hélicoïdales pour fluide de refroidissement (1) selon la revendication 1, où la section de retour (56) débouche dans une face frontale de la cavité (11) qui est opposée à la face frontale de l'extrémité axiale du boîtier de broches (10) inséré.

3. Pompe électrique à broches hélicoïdales pour fluide de refroidissement (1) selon la revendication 1 ou 2, où l'élément d'étanchéité (4) entoure radialement l'embouchure de la section de retour (56) et l'ouverture d'entrée (16) du boîtier de broches (10).

4. Pompe électrique à broches hélicoïdales pour fluide de refroidissement (1) selon l'une des revendications précédentes, où le boîtier de réception (15) est formé d'une seule pièce sur un boîtier de l'ensemble (5), qui est régulé en température par le circuit de régulation de température (50).

5. Pompe électrique à broches hélicoïdales pour fluide de refroidissement (1) selon l'une des revendications précédentes, où les broches hélicoïdales (2a, 2b) sont montées flottantes à l'intérieur du boîtier de broches (10) par un ajustement avec jeu.

6. Pompe électrique à broches hélicoïdales pour fluide de refroidissement (1) selon l'une des revendications précédentes, où une broche hélicoïdale (2a) et un arbre (32) du moteur électrique (3) sont reliés par un accouplement à emboîtement (23) avec un ajustement avec jeu.

7. Pompe électrique à broches hélicoïdales pour fluide de refroidissement (1) selon l'une des revendications précédentes, où le boîtier de broches (10) est délimité dans la zone de l'ouverture d'entrée (16) par un ressort d'ajustage (18) qui est inséré à travers une fente de montage radiale.

8. Pompe électrique à broches hélicoïdales pour fluide de refroidissement (1) selon la revendication 7, où l'élément d'étanchéité (4) entoure radialement une zone axiale de l'extrémité axiale du boîtier de broche (10) et étanchéifie la fente de montage radiale du ressort d'ajustage (18).

9. Pompe électrique à broches hélicoïdales pour fluide de refroidissement (1) selon l'une des revendications précédentes où une bague d'étanchéité (19) qui assure une étanchéité entre le côté pression et un environnement extérieur est disposée dans un espace radial entre le boîtier de broche (10) et le boîtier de réception (15).

10. Pompe électrique à broches hélicoïdales pour fluide de refroidissement (1) selon l'une des revendications précédentes, où la bride de boîtier (14) présente un siège de palier pour un palier d'arbre (31).

11. Pompe électrique à broches hélicoïdales pour fluide de refroidissement (1) selon l'une des revendications précédentes, où le palier d'arbre (31) est une douille de palier lisse qui est entourée d'un remplissage de lubrifiant étanchéifié.

12. Pompe électrique à broches hélicoïdales pour fluide de refroidissement (1) selon l'une des revendications précédentes, où une électronique de puissance (34) est disposée dans le boîtier du moteur (13) en contact thermique avec la bride de boîtier (14).

13. Dispositif de régulation de température (1) pour réguler la température d'un ensemble (5), comportant:
un boîtier de réception (15) dans lequel est reçu l'ensemble (5);
un circuit de régulation de température (50) qui est formé dans le boîtier de réception (15) et est en contact thermique avec l'ensemble (5);
une pompe électrique à broches hélicoïdales pour fluide de refroidissement (1) selon l'une des revendications 1 à 12, qui est intégrée dans le circuit de régulation de température (50), où
le boîtier de réception (15) est formé d'une seule pièce en tant que constituant commun du dispositif de régulation de température et de la pompe pour fluide de refroidissement à broches hélicoïdales électrique (1).

14. Dispositif de régulation de température (1) selon la revendication 13, où l'ensemble (5) est un module de stockage de batterie avec une multiplicité de cellules de batterie.
